# EUROPÄISCHE PATENTSCHRIFT

(11) **EP 0 951 004 B1**
(45) Veröffentlichungstag und Bekanntmachung des Hinweises auf die Patenterteilung: **10.12.2003**
(21) Anmeldenummer: 99107508.6
(22) Anmeldetag: 14.04.1999
(51) Int. Cl.: G09F 3/10, G09F 3/02

(54) **Leicht entfernbares Etikett für Mehrwegbehälter**
Easily removable label for reusable container
Etiquette amovible facilement pour conteneurs reutilisables

(30) Priorität: 15.04.1998 DE 29806781 U
(43) Veröffentlichungstag der Anmeldung: 20.10.1999
(73) Patentinhaber: Steinbeis PPL GmbH, 83098 Brannenburg (DE)
(72) Erfinder: Amberger, Werner, D-82061 Neuried bei München (DE); Link, Christian, D-85649 Brunnthal (DE); Schönfelder, Helmut, D-83626 Unterdarching, Valley (DE)
(74) Vertreter: Liska, Horst, Dr.-Ing.

(56) Entgegenhaltungen:
- EP-A- 0 510 403
- GB-A- 2 259 291
- US-A- 5 651 846

## Beschreibung

Die Erfindung betrifft ein Etikett für einen Gegenstand, insbesondere einen Mehrwegbehälter, wobei eine Trägermaterialschicht des Etiketts mittels einer Klebstoffschicht auf den Gegenstand aufklebbar ist und das Etikett unter Wärmeeinwirkung in heißem Waschfluid von dem Gegenstand ablösbar ist. Bei den Gegenständen kann es sich um Getränke- oder Arzneiflaschen aus Glas oder Kunststoff handeln, Reagenzgläser, mehrfach verwendbare Umverpackungen für eine Vielzahl von Einzelbehältern, insbesondere Getränkeflaschenkästen, etc. Die Erfindung betrifft ferner einen mit einem solchen Etikett versehenen Behälter, sowie ein Verfahren zum Aufkleben und Ablösen des Etiketts.

Zum Beispiel in der Getränkeindustrie unterliegen die verwendeten Behältnisse, etwa Flaschen, einer hohen Mehrwegquote. Die Behältnisse werden bei jedem Rücklauf vor der Neubefüllung gereinigt, wobei beim Waschen der Behältnisse auch die Etiketten entfernt werden. Anschließend werden die Behältnisse neu befüllt und entsprechend dem eingefüllten Getränketyp neu etikettiert. Sind die Behältnisse für eine bestimmte Produktgruppe standardisiert, z. B. eine Bierflasche, so brauchen die zur Brauerei zurücklaufenden Flaschen nicht nach Biersorten vorsortiert werden, wie dies bei dauerhaft vordekorierten Flaschen der Fall wäre. Die unterschiedliche Etikettierung erfolgt in der Regel erst nach der Befüllung. Bei einer nicht abwaschbaren Direktbedruckung der Flasche müßten hohe Lagervorräte an jeweils passend vordekorierten Flaschen bereitgehalten werden. In der Getränkeindustrie erfolgt das Waschen der Behältnisse, d. h. der Flaschen, in der Regel mit heißer Waschflüssigkeit, wie etwa verdünnter Natronlauge, erhitzt auf 60 bis 90 °C, ohne zusätzliche mechanische Unterstützung in Form von Bürsten, Hochdruckdüsen usw.

Häufig werden zur Etikettierung von Mehrwegbehältnissen Papieretiketten mit Naßleimklebstoffverwendet. Der Naßleimklebstoff wird dabei vollflächig oder in Streifen aufgebracht, wobei der Klebstoff erst unmittelbar vor der Etikettierung auf das Papier aufgetragen wird. Nachteilig ist, daß der Abfüller mit Naßleim hantieren muß, d. h. es kommt zur Maschinenverschmutzung, und die Handhabung dieser Etiketten ist schwieriger als die von selbstklebenden Etiketten.

Diesen Nachteil vermeiden selbstklebende Etiketten, die bereits mit Klebstoff ausgestattet vom Etikettenlieferanten bezogen werden. Wegen der standardisierten Abwaschbedingungen in der Getränkeindustrie konnten bisher nur Etiketten auf Papierbasis verwendet werden. Beim Abwaschen der Etiketten in der Waschstation wird die Wasserdurchlässigkeit von Papier dahingehend ausgenutzt, daß der Naßleimklebstoff relativ schnell mit der Waschflüssigkeit vollflächig in Kontakt kommt und sich in der vorgegebenen Waschzeit - im Bereich einiger Minuten - vollständig ablöst, wobei dann aber der Klebstoff in der Regel in der Waschflüssigkeit in Lösung geht. Diese hohe Permeabilität für Waschflüssigkeit und Wasser besitzen die bei vielen Etiketten verwendeten thermoplastischen Folien - wie Polyolefine, Polycarbonate, Polyester, Polyvinylchloride, Polystyrole etc. - nicht. Solche Folien verhindern den Zutritt der Waschflüssigkeit zur Grenzfläche von Klebstoff und Behälteroberfläche, so daß die nicht permeablen Folienetiketten sich nur langsam vom Etikettenrand her ablösen lassen, was ohne zusätzliche mechanische Unterstützung wie etwa Bürsten, Hochdruckstrahl etc. in einer wirtschaftlich vertretbaren Zeitspanne keine vollständige Ablösung des Etiketts gestattet. Diese mechanischen Mittel sind des höheren Aufwands wegen unerwünscht.

Im Falle des Papier-Naßleimetiketts quillt der Klebstoff an und löst sich dann ab. Im Falle von Papieretiketten, die mit Klebstoff vorbeschichtet sind, werden auch redispergierbare Klebstoffe eingesetzt. Zusätzlich gibt es besondere Papiersorten, die sich schnell auflösen können.

Insbesondere in der Getränkeindustrie gibt es jedoch eine zunehmende Nachfrage nach mit Klebstoff vorbeschichteten Etiketten auf Folienbasis. Solche Folienetiketten können im Gegensatz zu Papieretiketten auf vielfältigste Weise dekoriert werden. Sie sind im Gegensatz zu Papier auch in hochtransparenter Form erhältlich, sind naßfest und in standardisierten Maschinen mit hohen Geschwindigkeiten aufspendbar, ohne daß man mit Klebstoffen hantieren muß, wie etwa beim Naßleim-Papieretikett. Ihre mechanischen Eigenschaften im Hinblick auf Einreißfestigkeit und Dehnbarkeit sind denen von Papieretiketten weit überlegen. Jedoch sollten sich auch solche Folienetiketten mit vorhandenen Waschanlagen ebenso problemlos abwaschen lassen wie die bisher häufig verwendeten Papieretiketten.

Um nun trotzdem Etiketten auf Folienbasis für Mehrweggetränkeflaschen einsetzen zu können, wurden Etikettensysteme entwickelt, die eine rückstandslose Entfernung der Etiketten nach jedem Rücklauf gestatten. Beim sogenannten Contiroll-System werden die Rundumetiketten nicht vollflächig verklebt. Klebepunkte zwischen Etikett und Behälteroberfläche gibt es nur im Bereich des Überlappstoßes. Zum Entfernen des Etiketts werden die Etiketten in Achsrichtung des Behälters aufgeschlitzt. Hierbei kann der Behälter leicht beschädigt werden. Außerdem sind die Schlitzvorrichtungen sehr aufwendig. Dieses System gestattet keine Etikettierung nur über einen Teilumfang einer Flasche, da kein geschlossener Klebstoff vorhanden ist. Solche Rundumetiketten können sich auf dem Behälter verschieben, und es können Fremdstoffe zwischen das Etikett und die Behälteroberfläche eindringen, so daß diese Etiketten für sogenannte No-Label-Look-Anwendungen, also für Anwendungen, bei welchen Etiketten unter Verwendung hochtransparenter Folienmaterialien, die dort, wo sie unbedruckt sind, eine Durchsicht auf die Flasche bzw. das Füllgut erlauben, nicht in Frage kommen.

Weiter bekannt sind sogenannte Hülsenetiketten (Sleeve-Etiketten) aus schrumpfbarer Folie. Ein Folienschlauch wird über den Behälter gestülpt und anschließend unter Wärmezufuhr aufgeschrumpft. Eine Verklebung zwischen Etikett und Behälter fehlt hier völlig. Zum Entfernen muss das Etikett auch hier aufwendig aufgeschlitzt werden. Ein weiterer Nachteil dieser Etiketten ist, dass keine Edeldekorationen wie Metalleffekte oder Prägefoliendruck möglich sind, da diese Hülsen von hinten unmittelbar im Konterdruck bedruckt werden und solche Edeldekorationen nicht im gleichen Maße schrumpffähig sind wie der Foliendruckträger. Hierbei käme es zu Verschiebungen und zum Verlust an Brillanz. Im übrigen sind beide letztgenannten Etikettiersysteme materialaufwendig, da stets eine voll ständige Rundumdekoration des Gegenstands erforderlich ist.

Aus US 5 651 846 ist es bekannt, ein auf einen Behälter geklebtes Folienetikett mittels eines seinerseits klebenden Ablösebands von dem Behälter abzulösen. Der Ablösevorgang des Bands beginnt an einer Ecke oder Kante des Etiketts, welches dementsprechend mit einem Schlitz versehen werden muss, sofern das Etikett den Behälter vollständig umschließt. Bei einem in Umfangsrichtung des Behälters überlappenden Etikett aus rückschrumpfender Folie wird das Etikett in einem Heißluftstrom so weit erwärmt, dass sich der Überlappungbereich durch Rückschrumpfen öffnet und das Etikett dementsprechend mit dem Ablöseband abgezogen werden kann.

Aus EP 0 510 403 A1 ist ein in einer Waschflüssigkeit ablösbares Folienetikett bekannt, welches mit einem in der Waschflüssigkeit im Wesentlichen voll löslichen Haftklebstoff auf den Gegenstand aufgeklebt ist. Die Folie des Etiketts kann zur Erhöhung der Fälschungssicherheit biaxial gereckt sein.

Es ist Aufgabe der Erfindung, ein in einer heißen Waschflüssigkeit ablösbares Etikett anzugeben, welches sich mit geringem Aufwand von dem Gegenstand, auf welchen es geklebt ist, wieder ablösen lässt.

Die Erfindung geht von einem auf einen Gegenstand, insbesondere Getränkeflasche aufklebbaren und in heißer Waschflüssigkeit wieder ablösbaren Etikett des aus EP 0 510 403 A1 bekannten Typs aus und umfasst eine Trägermaterialschicht mit wenigstens einer in zumindest einer Richtung gereckten Kunststofffolienschicht und einer auf den Gegenstand aufzuklebenden Klebstoffschicht.

Die vorstehend angegebene Aufgabe wird hierbei dadurch gelöst, dass die gereckte Kunststofffolienschicht so ausgebildet ist, dass sie bei der Wärmeeinwirkung der heißen Waschflüssigkeit unter Überwindung der Haltekraft der auf den Gegenstand aufgeklebten Klebstoffschicht rückschrumpft und dass die Klebstoffschicht redispergierbaren Klebstoff enthält, der wenigstens bis zum betriebsmäßigen Ablösen des Etiketts von der Waschflüssigkeit im Wesentlichen nicht auflösbar ist, so dass die Waschflüssigkeit nicht mit Klebstoff angereichert ist.

Durch die Wärmeeinwirkung kommt es zu einem Rückschrumpf der Kunststofffolie, während gleichzeitig der Klebstoff an Klebkraft verliert. Hierdurch löst sich das Etikett etwa vom Rand her oder unter Kanalbildung allmählich vom Gegenstand ab und lässt sich ohne weiteres innerhalb kürzester Zeit entfernen.

Die heiße Waschflüssigkeit kann Tenside und Laugen, insbesondere Natronlauge, enthalten und kann diese vom Rand her oder durch die Kanäle schnell zu dem Klebstoff vordringen und diesen in kürzester Zeit ablösen. Der Klebstoff kann derart sein, dass er sich unter Einwirkung von reinem Wasser im Wesentlichen nicht löst, jedoch unter der Einwirkung der in der Getränkeindustrie üblicherweise verwendeten Waschflüssigkeit, etwa 1 - 2 %ige heiße Natronlauge, relativ schnell vom Behälter ablöst.

Bevorzugt sind die Schrumpfkraft der Folienschicht und die Haftwirkung des Klebstoffs derart aufeinander abgestimmt, dass sich das Etikett bei einer Temperatur von mehr als 50 °C, insbesondere mehr als 60 °C, während einer Dauer von 10 sec. bis 15 Minuten, insbesondere 1-6 Minuten, unter der Einwirkung von Waschflüssigkeit vollständig von dem Behälter ablösen lässt. Dies sind typische Waschbedingungen in herkömmlichen Flaschenwaschanlagen in der Getränkeindustrie.

Bevorzugt beruht die Abnahme der Haftwirkung des Klebstoffs auf einer Abnahme seiner Viskosität bei der Erwärmung des Etiketts während des Waschvorgangs.

Bevorzugt ist die Haltekraft des Klebstoffs zum Etikettenmaterial höher gewählt als die durch Schrumpfung der Kunststofffolienschicht bewirkte Lösekraft, so dass bei Ablösung des Etiketts vom Gegenstand die Klebstoff schicht am Etikett verbleibt und mit diesem, etwa mit Hilfe eines einfachen Siebs, aus der Waschflüssigkeit entfernt und entsorgt werden kann. Hierbei wird ferner erreicht, dass sich die Waschflüssigkeit nicht mit Klebstoff anreichern kann.

Bei dem Klebstoff handelt es sich um einen wenigstens bis zur Ablösung des Etiketts sich nicht in Wasser auflösenden Klebstoff, insbesondere einen redispergierbaren Klebstoff, wie etwa einen Dispersionsklebstoff auf Basis Acrylat oder copolymere Acrylat/Polyurethan-Verbindungen sowie Mischpolymerisate mit Acrylatanteil (z. B. Kautschuk/Acrylat).

Bevorzugt ist der Klebstoff vollflächig oder bereichsweise mit Lücken ggf. gemustert auf das Etikettenmaterial aufgetragen. Die vollflächige Auftragung gestattet eine Ausführung als sogenanntes No-Label-Look-Etikett, das dort, wo es unbedruckt ist, eine Durchsicht auf das Produkt erlaubt. Bei bereichsweise, d. h. fassonartig aufgetragenen Klebstoffen wird das Erscheinungsbild in der Regel gestört.

Die Klebstoffschicht kann auch ein unmittelbar vor dem Etikettieren auf den Gegenstand oder das Etikett aufgetragener Heißkleber oder Leim oder heißschmelzender Klebstoff sein.

Bevorzugt dient das Etikett zum Bekleben einer zylindrisch gewölbten Oberfläche des Behälters, etwa einer Getränkeflasche, wobei seine Reckrichtung oder - bei biaxial gerecktem Folienmaterial - Hauptreckrichtung in Umfangsrichtung oder quer, insbesondere senkrecht, zur Umfangsrichtung des Behälters verläuft. Bei den Kunststofffolien kann es sich um eine einzige monoaxial oder biaxial gereckte Kunststofffolienschicht handeln, oder um mehrere Kunststofffolienschichten, deren jeweilige Reckrichtung oder Hauptreckrichtung oftmals im Wesentlichen identisch ist. Im diesem Falle können die mehreren Kunststofffolienschichten coextrudiert oder einzeln hergestellt und mittels Kaschierkleber verbunden sein. Beide Folienschichten können in gleicher Richtung oder in kreuzenden Richtungen mit gleichem oder unterschiedlichem Ausmaß schrumpfbar gereckt sein, wobei bevorzugt die schwächer schrumpfende Folienschicht im Etikettenverbund unten, d.h. an der zur Klebstoffschicht weisenden Seite, zu liegen kommt. Die beiden Folienschichten können durch Kaschierkleber miteinander verbunden sein.

Es besteht ferner die Möglichkeit, für nur eine dieser Folienschichten, insbesondere die unten liegende Folienschicht, eine schrumpfbar gereckte Folie zu verwenden, und für die andere eine nicht schrumpfende Folie, d. h. eine thermofixierte dimensionsstabile Folie zu verwenden. Auch in diesem Fall kann man die beiden Folienschichten durch Kaschierkleber miteinander verbinden, z.B. Ein- oder Zweikomponenten-Kaschierkleber, etwa auf Polyurethanbasis, sowie Haftklebstoffe oder auch thermisch aktivierbare Klebstoffe.

Es besteht die Möglichkeit, daß die (Haupt-)Reckrichtung und somit die (Haupt)Rückschrumpfrichtung der Kunststofffolie(n) in Umfangsrichtung des zylindrischen Behälters verläuft, so daß das Etikett kurz vor dem vollständigen Ablösen nur noch im Bereich einer Linie an dem Behälter haftet. Eine weitere Möglichkeit besteht darin, die (Haupt-)Reckrichtung der Kunststofffolie(n) quer zur Umfangsrichtung des Behälters anzuordnen, so daß das Etikett kurz vor dem vollständigen Ablösen nur noch im Bereich eines Punkts an dem Behälter haftet.

Bevorzugt liegt der Schrumpfungsgrad der zumindest einen Kunststofff olienschicht - zumindest in Hauptschrumpfrichtung - bei Erwärmung auf eine der oben genannten Temperaturen im Bereich von ≥ 5 %, insbesondere ≥ 10 %, weiter insbesondere ≥ 15 - 20 % oder darüber.

Die Kunststofffolienschicht ist bevorzugt aus mono- oder biaxial gereckter Polyethylenterephtalat (PET)- oder Polyvinylchlorid (PVC)-Folie hergestellt, welche einen hohen Schrumpfungsgrad zeigt.

Um sicherzustellen, daß beim und nach dem Abwaschen der Klebstoff an dem Etikett haften bleibt und sich leicht entsorgen läßt, kann die den Klebstoff tragende Etikettenschicht vor dem Auftragen des Klebstoffhaftmittels behandelt sein, etwa durch Corona-Behandlung, Flammvorbehandlung, Plasmavorbehandlung oder chemisches Pfropfen oder mit Hilfe einer haftvermittelnden Zwischenschicht, die etwa chlorierte Polyolefine, chlorierten Kautschuk, Ethylen-Vinylacetat (EVA)-Copolymer, chloriertes Polypropylen oder polymerisierte Ethylen/Acrylamid-Comonomere enthält.

Das erfindungsgemäße Etikett kann die obengenannten Vorteile gegenüber herkömmlichen Papieretiketten aufweisen und gleichzeitig drei Hauptforderungen erfüllen:
1. Das Etikett kann in industrieüblichen Waschanlagen abgewaschen werden.
2. Es kommt weder zu einer Anreicherung der Waschflüssigkeit mit Klebstoff noch mit Folienbestandteilen, da sich diese auf einfachste Weise, etwa mit einem Sieb, herausfiltern lassen. 3. Das Folienetikett läßt sich als Ganzes zusammen mit dem darauf haftenden Klebstoff rückstandsfrei vom Gegenstand ablösen.

Die Erfindung wird nun anhand von Ausführungsbeispielen unter Hinweis auf die beigefügten Zeichnungen erläutert.
- Fig. 1: zeigt schematisch die Ablösung eines erfindungsgemäßen Etiketts an einem zylindrisch gekrümmten Gegenstand unter Wärmeeinwirkung;
- Fig. 1a, 1b,1c: zeigen Varianten von Fig. 1;
- Fig. 2: zeigt im Diagramm das Querschrumpfverhalten verschiedener monoaxial gereckter Polyesterfolien im Vergleich zu einer PVC-Folie (jeweilige Dicke 35 µm) und
- Fig. 3: zeigt im Diagramm das Längsschrumpfverhalten der Polyesterfolien und der PVC-Folie von Fig. 2.

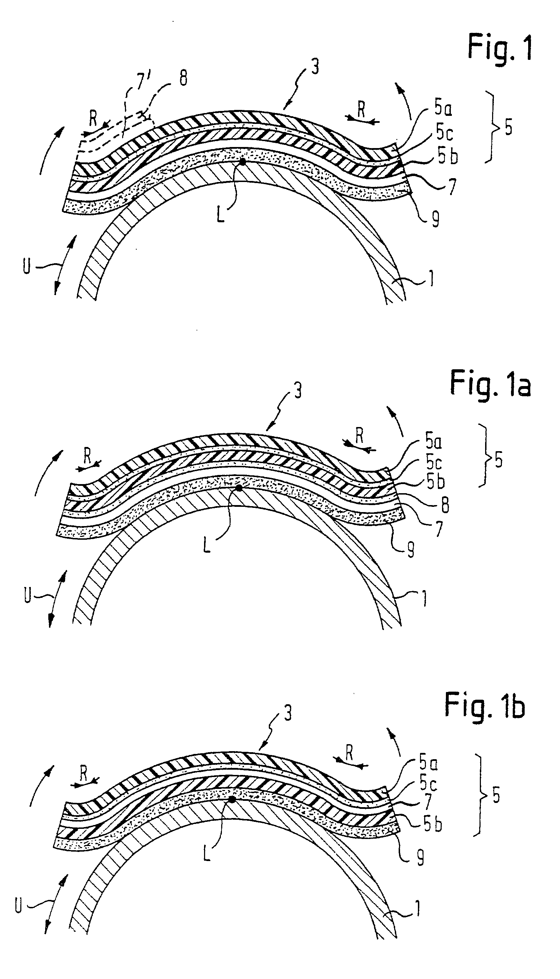

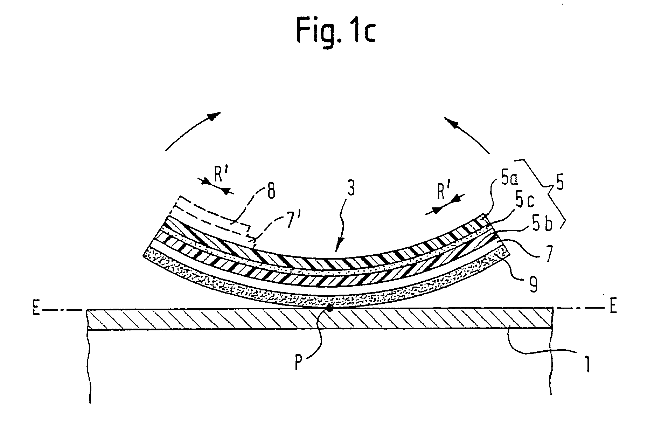

Fig. 1 zeigt schematisch einen achsnormalen Teilschnitt durch einen zylindrischen Behälter 1, wie etwa eine Getränkeflasche, auf deren Umfangsfläche ein Haftetikett 3 klebt. Das Etikett 3 weist oberseitig wenigstens eine zumindest in Umfangsrichtung gereckte schrumpfbare Kunststofffolienschicht 5 auf, die unterseitig direkt bedruckt ist mittels einer Aufdruckschicht 7, die ggf. nur in Teilbereichen der Fläche der Folienschicht 3 vorhanden sein kann. Die Folienschicht 5 kann oberseitig einen Aufdruck 7' tragen, der wiederum eine Schutzschicht 8, etwa in Form von Lack oder Kaschierfolie, tragen kann. Zuunterst weist das Etikett 3 eine Haftklebstoffschicht 9 auf. Unter Einwirkung heißer, insbesondere basischer Waschflüssigkeit mit etwa 1 -2 % NaOH, bei ca. 50 - 90 °C, schrumpft die oberseitige Deckschicht 5 bevorzugt in Hauptreckrichtung des Etiketts, d. h. in Umfangsrichtung U des Behältnisses 1, wie in Fig. 1 mit den Pfeilen R gezeigt. Gleichzeitig erniedrigt sich die Viskosität der Klebstoffschicht 9 derart, daß sich das Etikett 3 vom Rand her ausgehend in Umfangsrichtung des Behältnisses 1 zu lösen beginnt. Dies erleichtert den Zugang der umgebenden Waschflüssigkeit zu dem Klebstoff 9, was den Lösevorgang weiter beschleunigt. Kurz vor der vollständigen Ablösung haftet das Etikett nur noch im Bereich einer Linie L, die einer Erzeugenden der Umfangsfläche des Behälters 1 entspricht. Bei wenig oder nicht gewölbter Behälteroberfläche kann es auch zur Kanalbildung zwischen Haftetikett und Behälteroberfläche kommen, um den Zutritt der Waschflüssigkeit zu der Klebstoffschicht zu erleichtern.

Die Reckrichtung der Folienschicht 5 stimmt nicht notwendigerweise mit der Umfangsrichtung U des Behälters überein. Der Grund für diesen Rückschrumpfprozeß der Folienschicht 5 liegt darin, daß derart gereckte monooder biaxial orientierte nicht thermofixierte Folien einen "eingefrorenen" inneren Spannungszustand ihrer Moleküle besitzen, der unter Wärmezufuhr zu einer Rückorientierung der Moleküle führt, d. h. zur Schrumpfung der Folienschicht in der Richtung R, in der sie zuvor gereckt wurde. Dies bezeichnet man auch als Memory-Effekt.

Die hier bevorzugt verwendeten thermoplastischen Folien sind in der Waschflüssigkeit bzw. gegenüber Wasser unlöslich, dürfen jedoch eine gewisse Quellneigung besitzen. Es können einlagige Folien als auch mehrlagige Folienverbunde 5a, 5b eingesetzt werden, entweder in Form von Coextrudaten sowie Folienlaminaten, d. h. zusammenkaschierte Folien. Fig. 1 zeigt ein solches Laminat mit einer äußeren, obenliegenden Folie 5a, die mittels einer Kaschierkleberschicht 5c mit einer unteren Folie 5b verbunden ist. Die einzelnen Folienschichten von Coextrudaten oder Laminaten können gleiche oder unterschiedliche Schrumpfungsgrade aufweisen. Im Falle coextrudierter Folien 5a, 5b fehlt die Kaschierkleberschicht 5c.

Im Falle unterschiedlicher Schrumpfungsgrade der Einzelschichten schrumpft bevorzugt die dem Behälter zugewandte Schicht 5b weniger stark als die vom Behälter abgewandte Schicht 5a. Die Schicht 5a oder die Schicht 5b kann auch dimensionsstabil sein, d. h. bei der erhöhten Waschtemperatur im wesentlichen nicht schrumpfen. Somit kommt es durch das unterschiedliche Schrumpfverhalten der Einzelschichten 5a, b zu einer Art Bimetalleffekt, der dazu führt, daß sich die Etikettenränder zuerst vom Behälter ablösen, oder/und, je nach Schrumpfungsgrad der einen oder der mehreren Folien und Schrumpfungsrichtung in Bezug auf die Behälteroberfläche, zusätzlich zu der oben genannten Kanalbildung, die ebenfalls den beschleunigten Zutritt der Waschflüssigkeit zum Klebstoff ermöglicht.

Fig. 1a zeigt eine Variante von Fig. 1, bei der der Aufdruck 7 nicht unmittelbar auf die Unterseite der Folienschicht 5 aufgedruckt ist, sondern unter Zwischenfügung einer Haftvermittlerschicht 8, z. B. einer Acrylatschicht (Topcoating). Falls abweichend von Fig. 1a der Aufdruck 7 von oben auf die Folienschicht 5 aufgedruckt ist, wie in Fig. 1 mit 7' bezeichnet, kann sich auch hier zwischen dem Aufdruck 7' und der Folienschicht 5 eine Haftvermittlerschicht befinden. Der Aufdruck 7' kann mittels einer Schutzschicht 8, etwa einem Schutzlack oder einer Kaschierfolie, abgedeckt sein.

Wie in Fig. 1b gezeigt, kann der Aufdruck 7 auch zwischen zwei Folienschichten 5a, 5b eingeschlossen sein. Der Kaschierkleber 5c kann sich wie dargestellt zwischen dem Aufdruck 7 und der obenliegenden Folienschicht 5a befinden. Alternativ oder zusätzlich kann sich die Kaschierkleberschicht auch zwischen dem Aufdruck 7 und der unteren Folienschicht 5b befinden.

Fig. 1c zeigt eine Variante mit demselben Schichtaufbau wie Fig. 1, wobei aber die Hauptreckrichtung R' des Etiketts quer zur Umfangsrichtung, hier parallel zur Erzeugenden E-E der zylindrischen Umfangsfläche des Etiketts verläuft. Kurz vor der vollständigen Ablösung haftet das Etikett nur noch im Bereich eines Punktes P auf der Umfangsfläche des Behälters 1. Hierfür sind auch Etiketten mit dem Aufbau der Fig. 1a und b verwendbar.

Bei Folienlaminaten, bei denen zwei oder mehrere Folienlagen zusammenkaschiert sind, kann die Orientierungsrichtung der Einzelschichten gleich oder unterschiedlich sein, d. h. sowohl in als auch quer zur Maschinenlaufrichtung bei der Herstellung des Folienbands. Bevorzugt ist jedoch eine identische Orientierung der Einzellagen. Wesentlich ist, daß die Schrumpfkraft der Folien insgesamt bei den gegebenen Abwaschbedingungen höher ist als die Adhäsionskraft zwischen Klebstoff und Behälteroberfläche.

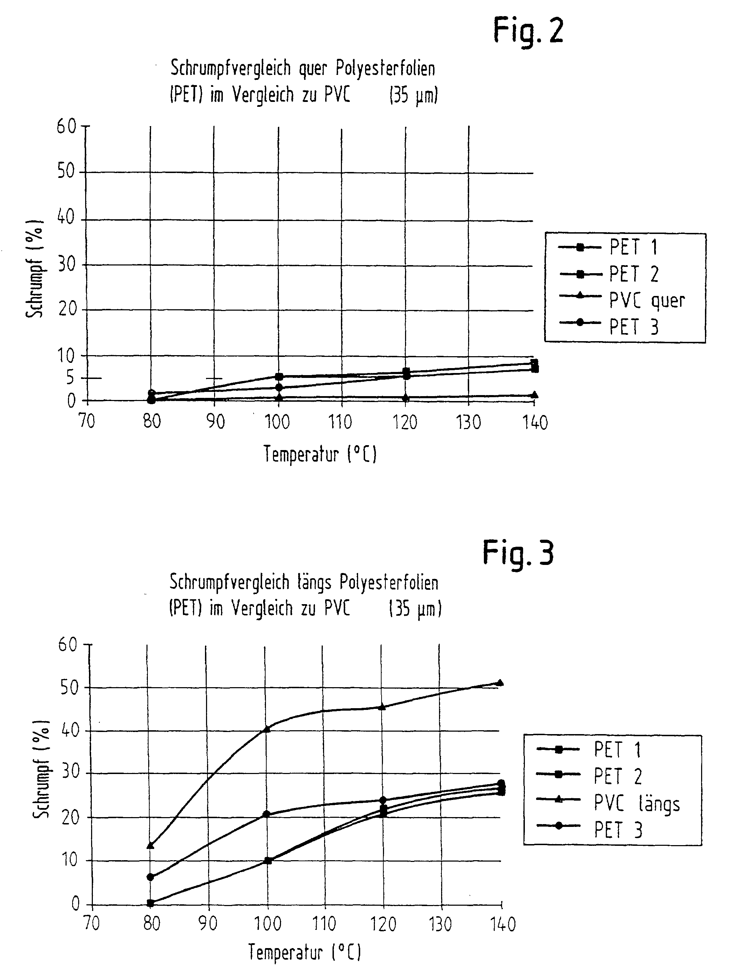

Bevorzugte Temperaturbereiche, in denen die in diesem Zusammenhang geeigneten Folien schrumpfen, beginnen oberhalb von 40 °C, insbesondere im Bereich von 60 - 90 °C, in dem die üblichen Flaschenwaschanlagen in der Getränkeindustrie arbeiten. Der Schrumpf solcher Folien sollte bei diesen Waschbedingungen mindestens 5 % in der Hauptschrumpfrichtung betragen, bevorzugt 15 - 20 % oder mehr. Beispiele solcher Folien sind insbesondere monoaxial oder biaxial gereckte schrumpfbare PET- oder PVCoder Polyesterfolien oder auch andere schrumpfbare Folien, wie etwa Polyethylen-, Polyproplyen-, Polyolefin-, Acetat- oder COC-Folien (Cycloolefin-Copolymer) oder andere, sowie Mischungen aus einem oder mehreren dieser Folienmaterialien in Dickenbereichen von 10 - 200 µm, bevorzugt jedoch im Dickenbereich von 30 - 100 µm. Beispiele möglicher Folien und deren Schrumpfverhalten sind aus den Fig. 2 und 3 zu entnehmen. Ein Vergleich der Fig. 2 und 3 zeigt, daß bei monoaxial geschrumpften Folien der Querschrumpf (Fig. 2) bei 90 °C bei allen geprüften PET- und PVC-Folien unter 5 % liegt, während der Längsschrumpf (Fig. 3) bei 90 °C der geprüften PET-Folien deutlich schwächer ausgeprägt ist als bei der PVC-Folie, der hier bei 90 °C fast 30 % erreicht. Für die vorliegende Anwendung wird daher PVC-Folie bevorzugt, da sie bei den in Waschanlagen üblichen Temperaturen eine besonders hohe Schrumpfkraft zeigt.

Der Schrumpf, die Zeit bis zum Ablösen des Etiketts und die zugehörige Temperatur stehen in Wechselwirkung. So benötigt z. B. eine PVC-Folie bei 80°C weniger als 3 min und bei 70°C über 5 min, bis der Schrumpf zur vollständigen Ablösung des Etiketts von einer Glasflasche führt.

Der Klebstoff löst sich beim Waschvorgang nicht in der Waschflüssigkeit auf, sondern löst sich zusammen mit der Etikettenfolie vom Behälter ab, wobei die Waschflüssigkeit nicht mit aufgelöstem Klebstoff angereichert wird. Damit die vollständige Auflösung des Klebstoffs nicht schon während des Waschvorgangs erfolgt, müssen diese Klebstoffe in ihrer Wasserlöslichkeit so eingestellt sein, daß diese erst ab einer Einwirkzeit der Waschsubstanz in der Regel von mehr als 10 min erfolgt, d. h. erst nach Ablösung des Etiketts. Es kann sich hierbei um einen druckempfindlichen als auch um einen wärmeempfindlichen Klebstoff handeln. Der Klebstoff kann vollflächig oder partiell aufgetragen sein, wie z. B. in streifen- oder punktförmigem Auftrag oder in anderem Muster.

Um sicherzustellen, daß sich Folie und Klebstoff sowie die gegebenenfalls zwischen der Folie 5 und dem Klebstoff 9 befindliche Aufdruckschicht 7 zusammenhängend rückstandsfrei vom Behälter lösen lassen, muß die relative Klebkraft - die Adhäsionskraft zwischen Folie und Klebstoff sowie deren Adhäsionskraft zur gegebenenfalls dazwischenliegenden Aufdruckschicht - zu jeder Phase des Abwaschprozesses größer sein als die absolute Klebkraft, nämlich die Adhäsionskraft zwischen Klebstoff und Behälteroberfläche. Dies erreicht man etwa durch geeignete Zusammensetzung des Klebstoffs sowie die entsprechende Oberflächenvorbehandlung der Folie sowie ggf. auch des Behälters. Die Vorbehandlung der Folienoberfläche vor der Klebstoffbeschichtung erfolgt bevorzugt durch Corona-Behandlung. Es kann sich jedoch auch um eine Flammvorbehandlung, Plasmavorbehandlung oder chemisches Pfropfen handeln. Um eine optimale Haftung des Klebstoffs auf der Folie zu gewährleisten, die in jedem Falle größer ist als die Haftung des Klebstoffs zum Behälter, kann auch zwischen Folie und Klebstoffschicht ein Haftvermittler zum Einsatz kommen, wie etwa ein Haftvermittler auf Basis chlorierter Polyolefine mit geringem Molekulargewicht oder einer Zusammensetzung aus chloriertem Kautschuk (20 - 60 %; 60 % Chloranteil), EVA-Copolymer (40 - 80 %; 25 % VA) und chloriertem Polypropylen (1 - 15 %; 25 - 50 % Chlor) oder ein Haftvermittler aus Ethylen/Acrylamid-Comonomeren, die durch Polymerisation aushärten.

Hierdurch wird auch erreicht, daß der Klebstoff unter dem viskositätserniedrigenden Einfluß der heißen Waschflüssigkeit so stabil bleibt, daß die Klebstoffschicht nicht kohäsiv bricht. Dies erreicht man insbesondere dann, wenn die Kohäsion des Klebstoffs unter den jeweiligen Waschbedingungen größer ist als die Adhäsion zwischen Klebstoff und Behälteroberfläche.

Falls sich zwischen Trägermaterialschicht 5 und Klebstoffschicht 8 noch die Aufdruckschicht 7 befindet, muß außerdem gewährleistet sein, daß die Haltekraft zwischen der Trägermaterialschicht 5 und der Aufdruckschicht 7 sowie der Aufdruckschicht 7 und der Klebstoffschicht 9 sowie außerdem die innere Kohäsion der Aufdruckschicht 7 und die innere Kohäsion der Klebstoffschicht 9 größer sind, als die Haltekraft von der Klebstoffschicht 9 zu der Behälteroberfläche 1, damit es weder zu einer Delamination zwischen der Trägermaterialschicht 5 und der Aufdruckschicht 7 oder der Aufdruckschicht 7 und der Klebstoffschicht 9 noch zu einem kohäsiven Bruch der Aufdruckschicht 7 oder der Klebstoffschicht 9 kommt und damit die Trägermaterialschicht 5, die Aufdruckschicht 7 und die Klebstoffschicht 9 als Einheit vom Behälter abgelöst werden.

## Patentansprüche

1. Auf einen Gegenstand (1), insbesondere eine Getränkeflasche aufklebbares und in heißer Waschflüssigkeit wieder ablösbares Etikett, umfassend
eine Trägermaterialschicht (5) mit wenigstens einer in zumindest einer Richtung gereckten Kunststofffolienschicht und einer auf den Gegenstand (1) aufzugebenden Klebstoffschicht (9),
**dadurch gekennzeichnet, dass** die gereckte Kunststofffolienschicht so ausgebildet ist, dass sie bei der Wärmeeinwirkung der heißen Waschflüssigkeit unter Überwindung der Haltekraft der auf den Gegenstand aufgeklebten Klebstoffschicht (9) rückschrumpft
und dass die Klebstoffschicht (9) redispergierbaren Klebstoff enthält, der wenigstens bis zum betriebsmäßigen Ablösen des Etiketts von der Waschflüssigkeit im Wesentlichen nicht auflösbar ist, so dass die Waschflüssigkeit nicht mit Klebstoff angereichert wird.

2. Etikett nach Anspruch 1, **dadurch gekennzeichnet, daß** die Haltekraft der Klebstoffschicht (9) bei der Temperatur der Waschflüssigkeit geringer ist als bei Umgebungslufttemperatur.

3. Etikett nach Anspruch 1 oder 2, **dadurch gekennzeichnet, daß** die Viskosität der Klebstoffschicht (9) bei der Temperatur der Waschflüssigkeit geringer ist als bei Umgebungslufttemperatur.

4. Etikett nach einem der vorhergehenden Ansprüche, **dadurch gekennzeichnet, dass** die Schrumpfkraft der Kunststofffolienschicht und die Haltekraft der Klebstoffschicht (9) derart eingestellt sind, dass sich das Etikett (3) bei einer Temperatur der Waschflüssigkeit von mehr als 50 °C, insbesondere mehr als 60 °C, während einer Dauer von 10 Sekunden bis 15 Minuten, insbesondere 1 bis 6 Minuten, weitgehend vollständig von dem Behälter (1) ablöst.

5. Etikett nach einem der vorhergehenden Ansprüche, **dadurch gekennzeichnet, dass** die Klebstoffschicht (9) und die Kunststofffolienschicht so ausgebildet sind, dass die Haltekraft der Klebstoffschicht (9) zur Trägermaterialschicht (5) höher ist als die durch Schrumpfung der Kunststofffolienschicht (5) bewirkte Lösekraft, so daß bei Ablösung des Etiketts (3) vom Gegenstand (1) die Klebstoffschicht (9) am Etikett (3) verbleibt.

6. Etikett nach einem der vorhergehenden Ansprüche, **dadurch gekennzeichnet, dass** sich zwischen der Trägermaterialschicht (5) und der Klebstoffschicht (9) eine Aufdruckschicht (7) befindet und die Trägermaterialschicht (5), die Aufdruckschicht (7) sowie die Klebstoffschicht (9) so ausgebildet sind, dass die Haltekraft der Trägermaterialschicht (5) zur Aufdruckschicht (7) und die Haltekraft der Aufdruckschicht (7) zur Klebstoffschicht (9) größer ist als die durch Schrumpfung der Trägermaterialschicht (5) bewirkte Lösekraft, so dass bei Ablösung des Etiketts (3) vom Behälter die Aufdruckschicht (7) und die Klebstoffschicht (9) am Etikett ver bleiben.

7. Etikett nach einem der vorhergehenden Ansprüche, **dadurch gekennzeichnet, daß** der Klebstoff ein Haftklebstoff ist.

8. Etikett nach einem der vorhergehenden Ansprüche, **dadurch gekennzeichnet, daß** die Klebstoffschicht (9) einen Dispersionsklebstoff enthält auf Basis von Acrylat, copolymere Acrylat/Polyurethan-Verbindungen, Mischpolymerisate mit Acrylatanteil, insbesondere Kautschuk/Acrylat, insbesondere Klebstoffe auf Basis wasserlöslicher oder wasserquellbarer Bindemittel, wie Acrylate, Polyacrylsäure und deren Ester, Naßleime, Polyglykolsäure, Polylactide, Polyethylenglykole, Polyamide, Polyester, Polyvinylalkohole.

9. Etikett nach einem der vorhergehenden Ansprüche, **dadurch gekennzeichnet, daß** die Klebstoffschicht (9) im wesentlichen vollflächig oder mit Lücken, insbesondere in Facon, aufgetragen ist.

10. Etikett nach einem der vorhergehenden Ansprüche, **dadurch gekennzeichnet, daß** das Etikett (3) über oder unter der Trägermaterialschicht (5) einen Aufdruck (7) trägt und insbesondere in vom Aufdruck (7) freien Bereichen durchsichtig ist.

11. Etikett nach einem der vorhergehenden Ansprüche, **dadurch gekennzeichnet, daß** die Trägermaterialschicht (5) eine einschichtige Folie ist oder mehrere coextrudierte Teilschichten (5a, 5b) enthält und oberseitig oder unterseitig direkt oder vermittels einer Haftvermittlerschicht (8) eine Aufdruckschicht (7) trägt.

12. Etikett nach einem der Ansprüche 1 bis 11, **dadurch gekennzeichnet, daß** die Trägermaterialschicht (5) zumindest zwei Teilschichten (5a, 5b) aufweist, die zwischen sich - gegebenenfalls unter Zwischenfügung einer Kaschierkleberschicht (5c) - eine Aufdruckschicht (7) einschließen.

13. Etikett nach Anspruch 12, **dadurch gekennzeichnet, daß** die Aufdruckschicht (7) auf eine der beiden Teilschichten (5a, 5b) direkt aufgedruckt ist und mit der anderen Teilschicht über die Kaschierkleberschicht (5c) verbunden ist.

14. Etikett nach einem der vorhergehenden Ansprüche, **dadurch gekennzeichnet, daß** das Etikett (3) zum Bekleben einer zylindrisch gewölbten Oberfläche des Gegenstands (1) dient und seine Reckrichtung (R) oder -bei biaxial gerecktem Folienmaterial - Hauptreckrichtung in Umfangsrichtung (U) des Gegenstands (1) verläuft.

15. Etikett nach einem der vorhergehenden Ansprüche, **dadurch gekennzeichnet, daß** das Etikett (3) zum Bekleben einer zylindrisch gewölbten Oberfläche des Gegenstands (1) dient und seine Reckrichtung (R') oder -bei biaxial gerecktem Folienmaterial - Hauptreckrichtung in einer die Umfangsrichtung (U) des Gegenstands (1) querenden Richtung (E-E) verläuft.

16. Etikett nach einem der vorhergehenden Ansprüche, **dadurch gekennzeichnet, daß** die Trägermaterialschicht (5) nur eine einzige monooder biaxial gereckte Kunststofffolienschicht (5) aufweist.

17. Etikett nach einem der Ansprüche 1 bis 15, **dadurch gekennzeichnet, daß** die Trägermaterialschicht (5) mehrere Kunststofffolienschichten (5a, 5b) aufweist, deren jeweilige Reckrichtung oder - bei biaxial gerecktem Folienmaterial - Hauptreckrichtung im wesentlichen identisch ist.

18. Etikett nach Anspruch 17, **dadurch gekennzeichnet, daß** die mehreren Kunststofffolienschichten (5a, 5b) coextrudiert oder einzeln hergestellt und mittels Kaschierkleber (5c) miteinander verbunden sind.

19. Etikett nach einem der Ansprüche 1 bis 15, **dadurch gekennzeichnet, daß** die Trägermaterialschicht (5) mehrere Kunststofffolienschichten (5a, 5b) aufweist, deren jeweilige Reckrichtung oder - bei biaxial gerecktem Folienmaterial - Hauptreckrichtung unterschiedlich ist.

20. Etikett nach einem der Ansprüche 17 bis 19, **dadurch gekennzeichnet, daß** von den mehreren Kunststofffolienschichten (5a, 5b) die der Klebstoffschicht (9) nähere Schicht (5b) weniger stark gereckt ist als die hiervon weiter entfernte Schicht (5a).

21. Etikett nach einem der Ansprüche 1 bis 15, **dadurch gekennzeichnet, daß** die Trägermaterialschicht (5) mehrere Kunststofffolienschichten (5a, 5b) aufweist, deren eine (5b), insbesondere der Klebstoffschicht (9) nähere, mono- oder biaxial gereckt ist und deren jeweils andere (5a) bei der Temperatur der Waschflüssigkeit im wesentlichen dimensionsstabil ist.

22. Etikett nach Anspruch 21, **dadurch gekennzeichnet, daß** die mehreren Kunststofffolienschichten (5a, 5b) mittels Kaschierkleber (5c) miteinander verbunden sind.

23. Etikett nach einem der vorhergehenden Ansprüche, **dadurch gekennzeichnet, daß** der Schrumpfungsgrad der zumindest einen Kunststofffolienschicht (5) - zumindest in Hauptreckrichtung - bei Erwärmung durch die heiße Waschflüssigkeit im Bereich von ≥ 5 %, insbesondere ≥ 8 %, weiter insbesondere ≥ 15 % liegt.

24. Etikett nach einem der vorhergehenden Ansprüche, **dadurch gekennzeichnet, daß** die zumindest eine Kunststofffolienschicht (5) aus mono- oder biaxial gereckter Polyethylenterephtalat (PET)- oder Polyvinylchlorid (PVC)-Folie hergestellt ist.

25. Etikett nach einem der vorhergehenden Ansprüche, **dadurch gekennzeichnet, daß** die die Klebstoffschicht (9) tragende Etikettenschicht des Etiketts (3) vor dem Auftragen der Klebstoffschicht (9) haftvermittelnd behandelt ist, etwa durch Corona-Behandlung, Flammvorbehandlung, Plasmavorbehandlung oder chemisches Pfropfen oder mit Hilfe einer haftvermittelnden Zwischenschicht, welche insbesondere chlorierte Polyolefine, chlorierten Kautschuk, Ethylen-Vinyl-Acetat (EVA)-Copolymere, chloriertes Polypropylen oder polymerisierte Ethylen/Acrylamid-Comonomere enthält.

26. Etikett nach einem der vorhergehenden Ansprüche, **dadurch gekennzeichnet, daß** die Trägermaterialschicht (5) oberseitig einen Aufdruck (7') trägt.

27. Etikett nach Anspruch 26, **dadurch gekennzeichnet, daß** der Aufdruck (7') oberseitig mittels einer Schutzschicht (8), insbesondere einer Kaschierfolie oder einem Schutzlack, abgedeckt ist.

28. Behälter, insbesondere Getränkeflasche, versehen mit einem Etikett nach einem der vorhergehenden Ansprüche.

29. Verfahren zum Aufkleben eines Etiketts auf einen Gegenstand (1), insbesondere eine Getränkeflasche, und zum nachfolgenden Ablösen des Etiketts von dem Gegenstand (1),
wobei das Etikett, welches auf den Gegenstand (1) aufgeklebt wird, eine Trägermaterialschicht (5) mit wenigstens einer in zumindest einer Richtung gereckte Kunststofffolie und eine Klebstoffschicht (9) zum Aufkleben auf den Gegenstand (1) aufweist und in gerecktem Zustand dieser Kunststofffolienschicht auf den Gegenstand (1) geklebt wird und zum Ablösen von dem Gegenstand (1) mit heißer Waschflüssigkeit behandelt wird,
**dadurch gekennzeichnet, dass** die Kunststofffolienschicht des Etiketts, welches auf den Gegenstand (1) geklebt wird, so ausgebildet ist, dass sie bei der Einwirkung der heißen Waschflüssigkeit unter Überwindung der Haltekraft der auf den Gegenstand (1) aufgeklebten Klebstoffschicht (9) rückschrumpft, wobei die Klebstoffschicht redispergierbaren Klebstoff enthält, der wenigstens bis zum betriebsmäßigen Ablösen des Etiketts von der Waschflüssigkeit im Wesentlichen nicht auflösbar ist, so dass die Waschflüssigkeit nicht mit Klebstoff angereichert wird.

## Claims

1. Label, which can be glued on an article (1), in particular a drinks bottle, and which can be detached again in hot washing liquid, comprising a backing material layer (5) with at least one plastic film layer stretched in at least one direction, and an adhesive layer (9) to be glued on the article (1), **characterised in that** the stretched plastic film layer is constructed in such a way that under the effect of the heat of the hot washing liquid it shrinks back by overcoming the retention force of the adhesive layer (9) glued on the article, and **in that** the adhesive layer (9) contains redispersible adhesive which, at least up until operational removal of the label, substantially cannot be dissolved by the washing liquid so the washing liquid is not enriched with adhesive.

2. Label according to claim 1, **characterised in that** the retention force of the adhesive layer (9) is lower at the temperature of the washing liquid than at the ambient air temperature.

3. Label according to claim 1 or 2, **characterised in that** the viscosity of the adhesive layer (9) is lower at the temperature of the washing liquid than at the ambient air temperature.

4. Label according to any of the preceding claims, **characterised in that** the shrinking force of the plastic film layer and the retention force of the adhesive (9) are adjusted such that the label (3) detaches largely completely from the container (1) at a temperature of the washing liquid above 50°C, in particular above 60°C, over a time of 10 seconds to 15 minutes, in particular 1 to 6 minutes.

5. Label according to any of the preceding claims, **characterised in that** the adhesive layer (9) and the plastic film layer are constructed in such a way that the retention force of the adhesive layer (9) to the backing material layer (5) is higher than the detaching force caused by shrinkage of the plastic film layer (5), so on detachment of the label (3) from the article (1) the adhesive layer (9) remains on the label (3).

6. Label according to any of the preceding claims, **characterised in that** a printed layer (7) is located between the backing material layer (5) and the adhesive layer (9), and the backing material layer (5), the printed layer (7) and the adhesive layer (9) are constructed in such a way that the retention force of the backing material layer (5) to the printed layer (7) and the retention force of the printed layer (7) to the adhesive layer (9) is greater than the detaching force caused by shrinkage of the backing material layer (5), so on detachment of the label (3) from the container the printed layer (7) and the adhesive layer (9) remain on the label.

7. Label according to any of the preceding claims, **characterised in that** the adhesive is a pressure-sensitive adhesive.

8. Adhesive label according to any of the preceding claims, **characterised in that** the adhesive layer (9) contains a dispersion adhesive based on acrylate, copolymeric acrylate/polyurethane compounds, copolymers with an acrylate component, in particular rubber/acrylate, in particular adhesives based on water-soluble or water-swellable binders, such as acrylates, polyacrylic acid and its esters, wet glues, polyglycolic acid, polylactides, polyethylene glycols, polyamides, polyesters and polyvinyl alcohols.

9. Label according to any of the preceding claims, **characterised in that** the adhesive layer (9) is applied substantially over the full surface or with gaps, in particular in a shaped manner.

10. Label according to any of the preceding claims, **characterised in that** the label (3) bears an imprint (7) above or below the backing material layer (5) and is in particular transparent in the regions free of the imprint (7).

11. Label according to any of the preceding claims, **characterised in that** the backing material layer (5) is a single-layer film or contains a plurality of coextruded partial layers (5a, 5b) and bears on its top or bottom side a printed layer (7), directly or by means of an adhesion promoter layer (8).

12. Label according to any of claims 1 to 11, **characterised in that** the backing material layer (5) has at least two partial layers (5a, 5b), which include between them a printed layer (7) - optionally with the interposition of a laminating adhesive layer (5c).

13. Label according to claim 12, **characterised in that** the printed layer (7) is printed directly on one of the two partial layers (5a, 5b) and is bonded to the other partial layer via the laminating adhesive layer (5c).

14. Label according to any of the preceding claims, **characterised in that** the label (3) is used for bonding onto a cylindrically curved surface of the article (1) and its stretching direction (R) or - in the case of biaxially stretched film material - its main stretching direction extends in the circumferential direction (U) of the article (1).

15. Label according to any of the preceding claims, **characterised in that** the label (3) is used for bonding onto a cylindrically curved surface of the article (1) and its stretching direction (R') or - in the case of biaxially stretched film material - its main stretching direction extends in a direction (E-E) crossing the circumferential direction (U) of the article (1).

16. Label according to any of the preceding claims, **characterised in that** the backing material layer (5) has only one single monoaxially or biaxially stretched plastic film layer (5).

17. Label according to any of claims 1 to 15, **characterised in that** the backing material layer (5) has a plurality of plastic film layers (5a, 5b), of which the respective stretching direction or - in the case of biaxially stretched film material - main stretching direction is substantially identical.

18. Label according to claim 17, **characterised in that** the plurality of plastic film layers (5a, 5b) are coextruded or produced individually and bonded to one another by means of a laminating adhesive (5c).

19. Label according to any of claims 1 to 15, **characterised in that** the backing material layer (5) has a plurality of plastic film layers (5a, 5b), of which the respective stretching direction - or in the case of biaxially stretched film material - main stretching direction is different.

20. Label according to any of claims 17 to 19, **characterised in that**, of the plurality of plastic film layers (5a, 5b), the layer (5b) closer to the adhesive layer (9) is less intensively stretched than the layer (5a) more remote therefrom.

21. Label according to any of claims 1 to 15, **characterised in that** the backing material layer (5) has a plurality of plastic film layers (5a, 5b), of which one layer (5b), in particular the one closer to the adhesive layer (9), is monoaxially or biaxially stretched and, of which the respective other layer (5a) is substantially dimensionally stable at the temperature of the washing liquid.

22. Label according to claim 21, **characterised in that** the plurality of plastic film layers (5a, 5b) are bonded to one another by means of laminating adhesive (5c).

23. Label according to any of the preceding claims, **characterised in that** the degree of shrinkage of the at least one plastic film layer (5) - at least in the main shrinkage direction - on heating by the hot washing liquid, lies in the region of ≥ 5%, in particular ≥ 8%, and more particularly in the region of ≥ 15%.

24. Label according to any of the preceding claims, **characterised in that** the at least one plastic film layer (5) is produced from monoaxially or biaxially stretched polyethylene terephthalate (PET) or polyvinyl chloride (PVC) film.

25. Label according to any of the preceding claims, **characterised in that** the label layer of the label (3) bearing the adhesive layer (9) is treated before application of the adhesive layer (9) so as to improve adhesion, for example by corona treatment, flame pretreatment, plasma pretreatment or chemical grafting or by means of an adhesion-promoting intermediate layer, which contains in particular chlorinated polyolefins, chlorinated rubber, ethylene/vinyl acetate (EVA) copolymers, chlorinated polypropylene or polymerised ethylene/acrylamide comonomers.

26. Label according to any of the preceding claims, **characterised in that** the backing material layer (5) bears an imprint (7') on its top side.

27. Label according to claim 26, **characterised in that** the imprint (7') is covered at its top side by means of a protective layer (8), in particular a lamination film or a protective lacquer.

28. Container, in particular a drinks bottle, provided with a label according to any of the preceding claims.

29. Method for gluing a label to an article (1), in particular a drinks bottle, and for subsequently detaching the label (3) from the article (1), the label (3) glued on the article (1), having a backing material layer (5) with at least one plastic film stretched in at least one direction and an adhesive layer (9) for gluing onto the article (1) and in the stretched state of this plastic film layer is glued onto the article (1) and for removal from the article (1) is treated with hot washing liquid, **characterised in that** the plastic film layer of the label, glued to the article (1), is constructed in such a way that under the effect of the hot washing liquid it shrinks back by overcoming the retention force of the adhesive layer (9) stuck on the article (1), the adhesive layer containing redispersible adhesive which, at least up until operational removal of the label, substantially cannot be dissolved by the washing liquid so the washing liquid is not enriched with adhesive.

## Revendications

1. Étiquette à coller sur un objet (1), en particulier une bouteille, et pouvant être à nouveau décollée dans un liquide de lavage chaud, comprenant
une couche support (5) avec au moins un film plastique étiré dans au moins une direction et une couche de colle (9) à coller sur l'objet (1),
**caractérisée en ce que** le film plastique étiré est conçu de telle sorte que, sous l'effet de la chaleur du liquide de lavage chaud, il se rétracte en surmontant la force de retenue de la couche de colle (9) collée sur l' obj et,
et **en ce que** la couche de colle (9) contient une colle redispersive qui, au moins jusqu'au moment du décollage fonctionnel de l'étiquette, ne se dissout pratiquement pas par le liquide de lavage, de telle sorte que la colle ne se concentre pas dans le liquide de lavage.

2. Étiquette selon la revendication 1, **caractérisée en ce que** la force de retenue de la couche de colle (9) à la température du liquide de lavage est plus faible qu'à la température de l'air ambiant.

3. Étiquette selon la revendication 1 ou 2, **caractérisée en ce que** la viscosité de la couche de colle (9) à la température du liquide de lavage est plus faible qu'à la température de l'air ambiant.

4. Étiquette selon l'une des revendications précédentes, **caractérisée en ce que** la force de retrait du film plastique et la force de retenue de la couche de colle (9) sont définies de telle sorte que, sous l'effet d'une température du liquide de lavage supérieure à 50°C, en particulier supérieure à 60°C, pendant une durée de 10 secondes à 15 minutes, en particulier de 1 à 6 minutes, l'étiquette (3) se décolle en grande partie complètement du récipient (1).

5. Étiquette selon l'une des revendications précédentes, **caractérisée en ce que** la couche de colle (9) et le film plastique sont conçus de telle sorte que la force de retenue de la couche de colle (9) par rapport à la couche support (5) est supérieure à la force de décollage produite par le retrait du film plastique (5), de telle sorte que, au moment du décollage de l'étiquette (3) de l'objet (1), la couche de colle (9) reste contre l'étiquette (3).

6. Étiquette selon l'une des revendications précédentes, **caractérisée en ce qu'**une couche à impression (7) est disposée entre la couche support (5) et la couche de colle (9), et la couche support (5), la couche à impression (7), ainsi que la couche de colle (9) sont conçues de telle sorte que la force de retenue de la couche support (5) par rapport à la couche à impression (7) et la force de retenue de la couche à impression (7) par rapport à la couche de colle (9) sont supérieures à la force de décollage produite par le retrait de la couche support (5), de telle sorte que, au moment du décollage de l'étiquette (3) du récipient (1), la couche à impression (7) et la couche de colle (9) restent contre l'étiquette (3) .

7. Étiquette selon l'une des revendications précédentes, **caractérisée en ce que** la colle est une colle autoadhésive.

8. Étiquette selon l'une des revendications précédentes, **caractérisée en ce que** la couche de colle (9) contient une colle dispersive à base d'acrylate, de composés copolymères acrylate-polyuréthanne, de copolymères contenant un acrylate, en particulier du caoutchouc-acrylate, en particulier des colles à base de liant soluble à l'eau ou gonflable à l'eau, tel que l'acrylate, l'acide polyacrylique et des esters de ceux-ci, des colles par voie humide, des acides polyglycols, des polylactides, des polyéthylèneglycols, des polyamides, des polyesters, des alcools polyvinyliques.

9. Étiquette selon l'une des revendications précédentes, **caractérisée en ce que** la couche de colle (9) est appliquée sensiblement sur toute la surface ou en laissant des interstices, en particulier selon un motif.

10. Étiquette selon l'une des revendications précédentes, **caractérisée en ce que** l'étiquette (3) porte une impression (7) au-dessus ou au-dessous de la couche support (5) et en particulier est transparente dans des zones laissées sans impression (7).

11. Étiquette selon l'une des revendications précédentes, **caractérisée en ce que** la couche support (5) est un film à une seule couche ou contient plusieurs couches partielles (5a, 5b) co-extrudées et porte, sur sa face supérieure ou sur sa face inférieure, une couche à impression (7) appliquée directement ou par l'intermédiaire d'une couche d'adhérence (8).

12. Étiquette selon l'une des revendications 1 à 11, **caractérisée en ce que** la couche support (5) comporte au moins deux couches partielles (5a, 5b), entre lesquelles - le cas échéant, en intercalant une couche d'adhésif à contrecoller (5c) - est disposée une couche à impression (7).

13. Étiquette selon la revendication 12, **caractérisée en ce que** la couche à impression (7) est appliquée directement sur l'une des deux couches partielles (5a, 5b) et est assemblée avec l'autre couche partielle par l'intermédiaire de la couche d'adhésif à contrecoller (5c).

14. Étiquette selon l'une des revendications précédentes, **caractérisée en ce que** l'étiquette (3) est destinée à être collée sur une surface courbe cylindrique de l'objet (1) et sa direction d'étirage (R) ou - dans le cas d'un film étiré biaxialement - sa direction principale d'étirage est orientée dans le sens périphérique (U) de l'objet (1).

15. Étiquette selon l'une des revendications précédentes, **caractérisée en ce que** l'étiquette (3) est destinée à être collée sur une surface courbe cylindrique de l' objet (1) et sa direction d'étirage (R) ou - dans le cas d'un film étiré biaxialement - sa direction principale d'étirage est orientée dans une direction (E-E) croisant le sens périphérique (U) de l'objet (1).

16. Étiquette selon l'une des revendications précédentes, **caractérisée en ce que** la couche support (5) ne comporte qu'un seul film plastique (5) étiré de manière mono-axiale ou biaxiale.

17. Étiquette selon l'une des revendications 1 à 15, **caractérisée en ce que** la couche support (5) comporte plusieurs films plastiques (5a, 5b), dont la direction d'étirage de chacun ou - dans le cas d'un film étiré biaxialement - la direction principale d'étirage de chacun sont sensiblement identiques.

18. Étiquette selon la revendication 17, **caractérisée en ce que** la pluralité de films plastiques (5a, 5b) sont co-extrudés ou fabriqués séparément et sont assemblés les uns aux autres au moyen d'un adhésif à contrecoller (5c).

19. Étiquette selon l'une des revendications 1 à 15, **caractérisée en ce que** la couche support (5) comporte plusieurs films plastiques (5a, 5b) dont la direction d'étirage de chacun ou - dans le cas d'un film étiré biaxialement - la direction principale d'étirage de chacun sont différentes.

20. Étiquette selon l'une des revendications 17 à 19, **caractérisée en ce que** parmi la pluralité de films plastiques (5a, 5b), la couche (5b) la plus proche de la couche de colle (9) est moins étirée que la couche (5a) plus éloignée de celle-ci.

21. Étiquette selon l'une des revendications 1 à 15, **caractérisée en ce que** la couche support (5) comporte plusieurs films plastiques (5a, 5b), parmi lesquels l'un (5b), en particulier le plus proche de la couche de colle (9), est étiré de manière mono-axiale ou biaxiale et respectivement l'autre (5a) est sensiblement stable en dimensions à la température du liquide de lavage.

22. Étiquette selon la revendication 21, **caractérisée en ce que** les différents films plastiques (5a, 5b) sont assemblés les uns aux autres au moyen d'un adhésif à contrecoller (5c).

23. Étiquette selon l'une des revendications précédentes, **caractérisée en ce que**, au moment du chauffage par le liquide de lavage chaud, la valeur du retrait dans le/chaque film plastique (5) - au moins dans la direction principale d'étirage - se situe dans le domaine ≥ 5 %, en particulier ≥ 8 %, plus particulièrement ≥ 15 %.

24. Étiquette selon l'une des revendications précédentes, **caractérisée en ce que** le/chaque film plastique (5) est réalisé à partir d'un film étiré de manière mono-axiale ou biaxiale, en polyéthylène téréphtalate (PET) ou en chlorure de polyvinyle (PVC).

25. Étiquette selon l'une des revendications précédentes, **caractérisée en ce que** la couche de l'étiquette (3) portant la couche de colle (9) est traitée pour générer une adhérence avant l'application de la couche de colle (9), à savoir par un traitement corona, un prétraitement thermique, un prétraitement au plasma ou un tamponnage chimique ou au moyen d'une couche intermédiaire adhésive, qui contient en particulier des polyoléfines chlorées, du caoutchouc chloré, des copolymères d'éthylène-vinyle-acétate (EVA), du polypropylène chloré ou des comonomères d'éthylène-acrylamide polymérisés.

26. Étiquette selon l'une des revendications précédentes, **caractérisée en ce que** la face supérieure de la couche support (5) porte une impression (7').

27. Étiquette selon la revendication 26, **caractérisée en ce que** la face supérieure de l'impression (7') est recouverte par une couche de protection (8), en particulier un film de revêtement ou un vernis de revêtement.

28. Récipient, en particulier bouteille pour boissons, muni d'une étiquette selon l'une des revendications précédentes.

29. Procédé destiné à coller une étiquette sur un objet (1), en particulier une bouteille pour boissons, et à décoller ensuite l'étiquette de l'objet (1),
dans lequel l'étiquette, qui sera collée sur l'objet (1), comporte une couche support (5) avec au moins un film plastique étiré dans au moins une direction et une couche de colle (9) à coller sur l'objet (1), et ledit film plastique est collé à l' état étiré sur l'objet (1) et est traité avec un liquide de lavage chaud pour être décollé de l'objet (1),
**caractérisé en ce que** le film plastique de l'étiquette, destinée à être collée sur l'objet (1), est conçu de telle sorte que, sous l'effet de la chaleur du liquide de lavage chaud, il se rétracte en surmontant la force de retenue de la couche de colle (9) collée sur l'objet (1), la couche de colle (9) contenant une colle redispersive qui, au moins jusqu'au moment du décollage fonctionnel de l'étiquette, ne se dissout pratiquement pas par le liquide de lavage, de telle sorte que la colle ne se concentre pas dans le liquide de lavage.
